# EUROPEAN PATENT APPLICATION

(11) **EP 4 729 229 A1**
(43) Date of publication of application: **22.04.2026**
(21) Application number: 24895435.6
(22) Date of filing: 15.05.2024
(51) Int. Cl.: B23K 37/04, H01M 50/528

(54) **POLE WELDING DEVICE AND BATTERY ASSEMBLY SYSTEM**

(30) Priority: 30.11.2023 CN 202311641424
(71) Applicant: Contemporary Amperex Technology Co., Limited, Ningde, Fujian 352100 (CN)
(72) Inventor: WU, Kai, Ningde, Fujian 352100 (CN); WANG, Tengteng, Ningde, Fujian 352100 (CN); PAN, Wensheng, Ningde, Fujian 352100 (CN); QUE, Tianxiang, Ningde, Fujian 352100 (CN); FAN, Xiang, Ningde, Fujian 352100 (CN)
(74) Representative: Kraus & Lederer PartGmbB
(86) International application number: PCT/CN2024/093466
(87) International publication number: WO 2025/112324

(57) **Abstract**

A terminal post welding device (500) and a battery assembling system (1), wherein the terminal post welding device (500) comprises: a battery cell fixing assembly (510), a first tab pressing plate unit (520a) and a welding assembly (515), wherein the battery cell fixing assembly (510) is used to support and fix a battery cell (100) arranged in a lying-down state; the first tab pressing plate unit (520a) comprises a first driving assembly (521) and a first tab pressing plate (522), the first tab pressing plate (522) is mounted on the first driving assembly (521), and the first driving assembly (521) is used to drive the first tab pressing plate (522) to move so that the first tab pressing plate (522) presses the tab portion (1030) of the battery cell (100) onto the terminal post (104) of the battery cell (100); the welding assembly (515) is configured to weld the tab portion (1030) and the terminal post (104) that are pressed together.

## Description

The present application claims priority to Chinese patent application 2023116414241 filed on November 30, 2023 and titled "TERMINAL POST WELDING DEVICE AND BATTERY ASSEMBLING SYSTEM", which is incorporated herein by reference in its entirety.

### TECHNICAL FIELD

The present application relates to the field of battery processing, in particular to a terminal post welding device and a battery assembling system.

### BACKGROUND

With the development of battery technologies, battery cells are used in increasingly more fields, and have gradually replaced traditional fossil energy in the field of automotive power. Battery cells can store chemical energy and convert the chemical energy into electric energy in a controllable manner. In recyclable battery cells, active materials can be activated by charging for reuse after discharge.

In the production process of battery cells, the welding of the tab portion is a very important step. However, during the welding process of the tab portion, welding slag may fall into the interior of the battery cell, causing quality problems for the battery cell.

In addition, the above statements are intended solely to offer background information relevant to the present application and do not necessarily constitute the prior art.

### SUMMARY OF THE INVENTION

In view of the above problems, the present application provides a terminal post welding device and a battery assembling system, which can reduce the possibility of welding slag falling into the battery cell during the welding process of the tab portion.

An embodiment of the present application provides a terminal post welding device, which comprises: a battery cell fixing assembly, a first tab pressing plate unit and a welding assembly, the battery cell fixing assembly is used to support and fix a battery cell arranged in a lying-down state; the first tab pressing plate unit comprises a first driving assembly and a first tab pressing plate, the first tab pressing plate is mounted on the first driving assembly, and the first driving assembly is used to drive the first tab pressing plate to move so that the first tab pressing plate presses the tab portion of the battery cell onto the terminal post of the battery cell; the welding assembly is configured to weld the tab portion and the terminal post that are pressed together.

In this way, the battery cell is arranged on the battery cell fixing assembly in a lying-down state (that is, the tab portion and the terminal post are oriented horizontally), then the tab portion is pressed through the first tab pressing plate, and welded through the welding assembly, so that welding slag in the welding process is not easy to enter the interior of the battery cell under the action of gravity.

In some embodiments, the first driving assembly is configured to: drive the first tab pressing plate to perform a first movement so that the tab portion is pre-bent by the first tab pressing plate; and drive the first tab pressing plate to perform a second movement so that the tab portion is pressed onto the terminal post by the first tab pressing plate; the welding assembly is configured to: provide welding energy to the tab portion and the terminal post when the tab pressing plate presses the tab portion onto the terminal post.

In this way, by pre-bending the tab portion before bending, the possibility of wrinkles being generated in the tab portion during the bending process can be reduced.

In some embodiments, the first tab pressing plate defines a hollow area, and when the first tab pressing plate presses the tab portion onto the terminal post, the hollow area exposes an area to be welded of the tab portion; the welding assembly comprises a laser, the laser is used to emit laser and irradiate the laser through the hollow area and onto the area to be welded.

In this way, the tab portion can be welded when the first tab pressing plate is pressed on the surface of the terminal post, thereby reducing the possibility that the tab rebounds after being separated from the first tab pressing plate and the welding quality is further reduced.

In some embodiments, the terminal post welding device further comprises a second tab pressing plate unit, the second tab pressing plate unit has the same structure as the first tab pressing plate unit, and the first tab pressing plate unit and the second tab pressing plate unit operate alternately; the terminal post welding device is provided with a welding station, a first pressing plate replacing station and a second pressing plate replacing station, and the first pressing plate replacing station and the second pressing plate replacing station are respectively located on opposite sides of the welding station; the welding assembly is arranged corresponding to the welding station, the first tab pressing plate unit is configured to be capable of being driven to switch and move between the welding station and the second pressing plate replacing station, and the second tab pressing plate unit is configured to be capable of being driven to switch and move between the welding station and the first pressing plate replacing station; the terminal post welding device further comprises a first pressing plate replacing assembly and a second pressing plate replacing assembly; the first pressing plate replacing assembly is arranged at the first pressing plate replacing station, and is used for replacing the first tab pressing plate in the second tab pressing plate unit located at the first pressing plate replacing station; the second pressing plate replacing assembly is arranged at the second pressing plate replacing station, and is used for replacing the first tab pressing plate in the first tab pressing plate unit located at the second pressing plate replacing station.

In this way, when the first tab pressing plate unit needs to be cleared up or replaced, it can be moved from the welding station to the first pressing plate replacing station through the first pressing plate replacing assembly, and the second tab pressing plate unit can be moved from the second pressing plate replacing station to the welding station through the second pressing plate replacing assembly to perform bending operation in place of the first tab pressing plate unit, thereby reducing the downtime of the terminal post welding device during the replacement of the first tab pressing plate unit and improving production efficiency.

In some embodiments, the first pressing plate replacing assembly comprises a first pressing plate storage bin and a first pressing plate waste bin, the first pressing plate storage bin is used to store the first tab pressing plate to be replaced, and the first pressing plate waste bin is used to store the replaced first tab pressing plate.

In this way, the operator can regularly store a certain number of first tab pressing plates in the first pressing plate storage bin and clear away the first tab pressing plates in the first pressing plate waste bin, so that the terminal post welding device can maintain normal operation for a period of time.

In some embodiments, the terminal post welding device further comprises a reference assembly, the reference assembly is arranged corresponding to the welding assembly and comprises a reference plate unit and a pushing unit; the reference plate unit is configured to: move to a position between the welding assembly and the battery cell fixing assembly when the battery cell fixing assembly moves to correspond to the corresponding welding assembly; the pushing unit is configured to: push the battery cell fixing assembly and/or the battery cell to abut against the reference plate unit when the reference plate unit moves to a position between the welding assembly and the battery cell fixing assembly.

In this way, the battery cell is positioned by the reference assembly, so that the battery cell can be accurately positioned in the area to be welded.

In some embodiments, the terminal post welding device further comprises a code scanning assembly, the code scanning assembly is used to perform code scanning on the battery cell fixing assembly that supports and fixes the battery cell and the first tab pressing plate unit that presses the tab portion of the same battery cell.

In this way, the number of times that each first tab pressing plate unit bends the tab portion can be conveniently counted, which is conducive to timely replacement of the first tab pressing plate.

In some embodiments, the terminal post welding device further comprises a first dust removal assembly, the first dust removal assembly is mounted on the first tab pressing plate unit; when the welding assembly welds the tab portion and the terminal post that are pressed together, the first dust removal assembly communicates with the gas in an area where the tab portion is located.

In this way, the welding slag, smoke and dust generated during the welding process can be preliminarily cleared away.

In some embodiments, the terminal post welding device further comprises a battery cell conveying assembly and a second dust removal assembly, the battery cell conveying assembly is used to drive the battery cell fixing assembly to move from the first tab pressing plate unit toward the second dust removal assembly, and the second dust removal assembly is used to remove dust from the welding area of the tab portion.

In this way, the welding slag and dust remaining in the battery cell after welding can be further cleared away.

In some embodiments, the second dust removal assembly comprises a dust removal duct and a dust removal hood, the dust removal duct is used to communicate with an exhaust assembly, the dust removal hood communicates with the dust removal duct and is used to press onto the terminal post of the battery cell to form an exhaust space between the terminal post and the dust removal hood.

In this way, the second dust removal assembly can absorb and collect welding slag and dust for easy cleaning.

In some embodiments, the second dust removal assembly further comprises a moving brush, the moving brush is arranged in the dust removal hood and is used to contact the welding area of the tab portion and move; and/or the dust removal hood comprises a plug, and the plug is used for blocking at least a portion of the through hole of the terminal post.

In this way, the moving brush can further improve the efficiency of removing welding slag, and the plug can reduce the possibility of welding slag, smoke and dust entering the battery cell through the through hole.

In some embodiments, the battery cell conveying assembly is configured to convey the battery cell fixing assembly along a circulation path, the circulation path comprises an upper path, a descending path, a lower path and an ascending path connected in sequence; and the battery cell conveying assembly is configured to: when the battery cell fixing assembly enters the descending path from the upper path, drive the battery cell fixing assembly to convey it along the descending path toward the lower path in a translational manner; when the battery cell fixing assembly enters the ascending path from the lower path, drive the battery cell fixing assembly to convey it along the ascending path toward the upper path in a translational manner.

In this way, the battery cell conveying assembly can receive the battery cells cyclically and convey the battery cells to the first pressing plate unit.

In some embodiments, the head end of the battery cell fixing assembly is used to connect the tail end of the adjacent battery cell fixing assembly, and the battery cell fixing assemblies are configured to: lock with each other along the direction from the head end to the tail end and be relatively movable along a direction perpendicular to the direction from the head end to the tail end.

In this way, the battery cell fixing assemblies can be separably connected. When connected, the connected battery cell fixing assemblies can move synchronously. After being separated, the battery cell fixing assemblies can enter different paths among the upper path, the descending path, the lower path and the ascending path, respectively.

In some embodiments, the battery cell conveying assembly comprises: a first drive unit, a second drive unit, a first lifting unit and a second lifting unit, the first drive unit is used to drive at least one battery cell fixing assembly located in the upper path to move along the upper path, so that all battery cell fixing assemblies located in the upper path move along the upper path, the first lifting unit is arranged at the tail end of the upper path, and is used to drive the battery cell fixing assembly to separate from the battery cell fixing assembly located in the upper path, enter the descending path, and connect with the battery cell fixing assembly located in the lower path, the second drive unit is used to drive at least one battery cell fixing assembly located in the lower path to move along the lower path, so that all battery cell fixing assemblies located in the lower path move along the lower path; the second lifting unit is arranged at the head end of the upper path, and is used to drive the battery cell fixing assembly to separate from the battery cell fixing assembly located in the lower path, enter the ascending path, and connect with the battery cell fixing assembly located in the upper path.

In this way, compared with the case where the various paths of the battery cell conveying assembly are arranged on the same horizontal plane, the floor space occupied by the battery cell conveying assembly can be reduced.

In some embodiments, the battery cell fixing assembly has a first connecting portion located at the head end and a second connecting portion located at the tail end, one of the first connecting portion and the second connecting portion is provided with a limiting slide groove, the extension direction of the limiting slide groove is perpendicular to the direction from the head end to the tail end, and the other is provided with a roller slidably arranged in the limiting slide groove, so that when any two battery cell fixing assemblies are connected, they are relatively locked in the direction from the head end to the tail end, and can slide relatively in the direction along the extension direction of the limiting slide groove.

In this way, the friction of the battery cell fixing assembly during the separation process can be reduced, so that the battery cell fixing assembly is easier to separate. In addition, the use of the roller can also reduce the probability of failure of the battery cell fixing assembly to connect when the battery cell fixing assemblies are not aligned during the connection process.

In some embodiments, the terminal post welding device further comprises a photographing assembly, the battery cell conveying assembly is used to drive the battery cell fixing assembly to move from the second dust removal assembly toward the photographing assembly, the photographing assembly comprises a 2D camera system and/or a 3D camera system, the 2D camera system is used to take pictures of the terminal posts that have been welded, and the 3D camera system is used to perform 3D contour line scanning on the terminal posts that have been welded.

In this way, defects such as weld marks and weld mark height after welding of the tab portion can be identified.

In some embodiments, the first tab pressing plate is made of tungsten steel.

In this way, the strength and heat resistance of the first tab pressing plate can be improved.

In some embodiments, the terminal post welding device further comprises a battery cell loading assembly and a battery cell flipping assembly; the battery cell loading assembly is used to support the battery cells arranged upright and transport the battery cells toward the battery cell flipping assembly; the battery cell flipping assembly is used to clamp the battery cells arranged upright, flip the battery cells to a lying-down state, and place the battery cells arranged in a lying-down state onto the battery cell fixing assembly.

In this way, the battery cells can be automatically flipped, thereby improving the loading efficiency.

An embodiment of the present application further provides a battery assembling system, which comprises the above-mentioned terminal post welding device.

In some embodiments, the battery cell comprises a case, a bottom cover and an electrode assembly; the case has an open end, a terminal post is arranged on a wall of the case opposite to the open end, the terminal post has a through hole, and the case and the bottom cover are connected to form an accommodating cavity in communication with the through hole; the active material coating portion of the electrode assembly is arranged in the case, and the tab portion of the electrode assembly passes through the through hole to connect with a side of the terminal post away from the accommodating cavity; the battery assembling system further comprises a conveying device and an assembling device, the conveying device is used to convey a structure to be assembled to the stations of the assembling device; the station of the assembling device comprises at least a terminal post welding device; wherein the terminal post welding device is used to weld the tab portion passing through the through hole to a side of the terminal post away from the accommodating cavity.

In some embodiments, the battery assembling system further comprises a tab forming device, a case loading device, a tab threading device and a bottom cover welding device; wherein the tab forming device is used to weld a plurality of tab sheets of the electrode assembly to form a tab portion; the case loading device is used to load the electrode assembly into the case from the open end; the tab threading device is used to clamp the tab portion to pass through the through hole when the electrode assembly is loaded into the case; the bottom cover welding device is used to weld the bottom cover to the open end of the case.

### DESCRIPTION OF DRAWINGS

By reading the detailed description of the preferred implementations below, various other advantages and benefits will become apparent to those of ordinary skill in the art. The drawings are used for the purpose of illustrating the preferred embodiments only and are not to be considered a limitation to the present application. Moreover, in all of the drawings, like reference numerals represent like components. In the drawings:
FIG. 1 is a schematic exploded structural diagram of a battery cell according to one or more embodiments;
FIG. 2 is a schematic cross-sectional diagram of a tab portion of the battery cell in FIG. 1;
FIG. 3 is a schematic layout diagram of a terminal post welding device according to one or more embodiments;
FIG. 4 is a schematic structural diagram of a first tab pressing plate unit according to one or more embodiments;
FIG. 5 is a schematic structural diagram of the first tab pressing plate unit in FIG. 4 from another perspective;
FIG. 6 is a schematic cross-sectional diagram of a first tab pressing plate according to one or more embodiments;
FIG. 7 is a schematic structural diagram of a first pressing plate replacing assembly and a second pressing plate replacing assembly according to one or more embodiments;
FIG. 8 is a top view of FIG. 6;
FIG. 9 is a schematic diagram showing the principle of positioning a battery cell through a reference assembly according to one or more embodiments;
FIG. 10 is a schematic structural diagram of a second dust removal assembly according to one or more embodiments;
FIG. 11 is a schematic structural diagram of a battery cell conveying assembly according to one or more embodiments;
FIG. 12 is a schematic structural diagram of a battery cell fixing assembly according to one or more embodiments;
FIG. 13 is a schematic structural diagram of two battery cell fixing assemblies being connected with each other according to one or more embodiments;
FIG. 14 is a schematic structural diagram of a first drive unit and a first guide unit in FIG. 11;
FIG. 15 is a schematic structural diagram of a first lifting unit or a second lifting unit in FIG. 11;
FIG. 16 is a schematic structural diagram of a second drive unit and a second guide unit in FIG. 11;
FIG. 17 is a schematic structural diagram of a battery cell loading assembly according to one or more embodiments;
FIG. 18 is a schematic structural diagram of a battery cell unloading assembly according to one or more embodiments;
FIG. 19 is a schematic diagram showing how a battery assembling system assembles a battery cell according to one or more embodiments.

Reference numerals in the DETAILED DESCRIPTION are as follows:
100 Battery cell;
101 Case; 101a Open end; 102 Bottom cover; 103 Electrode assembly; 1030 Tab portion; 104 Terminal post; 1040 Through hole;
500 Terminal post welding device;
510 Battery cell fixing assembly; 511 First connecting portion; 512 Second connecting portion; 513 Guide slide groove; 514 Roller; 515 Welding assembly; 516 Base; 517 Battery cell carrying portion; 518 Guide rail; 519 First limiting area;
520a First tab pressing plate unit; 520b Second tab pressing plate unit; 521 First driving assembly; 522 First tab pressing plate; 5210 Drive motor; 5220 Hollow area; 5221 Gas channel;
530a First pressing plate replacing assembly; 530b Second pressing plate replacing assembly; 531 First pressing plate storage bin; 532 First pressing plate waste bin; 533 Tab pressing plate clamp; 534 Motor;
540 Reference assembly; 541 Reference plate unit; 542 Pushing unit;
550 First dust removal assembly;
560 Battery cell conveying assembly; 561 First drive unit; 562 Second drive unit; 563 First lifting unit; 564 Second lifting unit; 565 First guide unit; 566 First drive block; 567 Second guide unit;
570 Second dust removal assembly; 571 Dust removal duct; 572 Dust removal hood; 573 Moving brush; 574 Plug; 575 Driving assembly; 576 First drive motor; 577 Second drive motor;
580 Battery cell loading assembly; 581 Conveying unit; 582 Loading robot arm; 583 Battery cell clamping claw; 584 First transfer motor; 585 Second transfer motor; 586 Battery cell flipping assembly;
590 Battery cell reset assembly; 595 Battery cell unloading assembly; 596 First unloading unit; 597 Second unloading unit;
1 Battery assembling system; 200 Tab forming device; 300 Case loading device; 400 Tab threading device; 600 Bottom cover welding device.

### DETAILED DESCRIPTION

Embodiments of the technical solutions of the present application will be described in detail below with reference to the drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF DESCRIPTION OF DRAWINGS are intended to cover non-exclusive inclusion.

In the description of the embodiments of the present application, the technical terms "first", "second", etc., are used only to distinguish between different objects and are not to be understood as indicating or implying a relative importance or implicitly specifying the number, particular order, or primary and secondary relationship of the technical features indicated. In the description of the embodiments of the present application, the meaning of "a plurality of' is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the description of the embodiments of the present application, the term "a plurality of" refers to two or more (including two), and similarly, "a plurality of groups" refers to two or more (including two) groups, and "a plurality of sheets" refers to two or more (including two) sheets.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like which indicate the orientation or positional relationship are based on the orientation or positional relationship shown in the accompanying drawing, and are only for the convenience of describing the embodiments of the present application and simplifying the description, and do not indicate or imply that the device or element referred to must have a specific orientation, be constructed and operated in a specific orientation, and therefore cannot be construed as a restriction on the embodiments of the present application.

In the description of the embodiments of the present application, unless otherwise expressly specified or limited, the technical terms "mounted", "linked", "connected", "fixed" and other terms shall be understood broadly, for example, they may be fixed, detachable, or integral, or mechanically or electrically connected, or directly linked, or indirectly linked through an intermediate medium, and may be communicated internally or interacted between two elements. For those of ordinary skill in the art, the specific meaning of the above terms in the present application may be understood on a case-by-case basis.

With the development of battery technologies, battery cells are applied in increasingly more fields and gradually replace traditional fossil fuels in the field of automotive power. Battery cells can store chemical energy and convert the chemical energy into electric energy in a controllable manner. In recyclable battery cells, active materials can be activated by charging for reuse after discharge.

At present, during the welding process of the tab portion of most battery cells, the battery cells are arranged upright, which makes it easy for welding slag to enter the interior of the battery cells under the action of gravity, making the battery cells prone to quality problems.

In order to reduce the possibility of welding slag entering the battery cell, the battery cell can be welded in a lying-down state, so that the welding slag is more likely to fall off under the action of gravity rather than entering the interior of the battery cell. For example, a terminal post welding device may comprise a battery cell fixing assembly, a first tab pressing plate unit and a welding assembly, the battery cell fixing assembly is used to support and fix a battery cell arranged in a lying-down state; the first tab pressing plate unit comprises a first driving assembly and a first tab pressing plate, the first tab pressing plate is mounted on the first driving assembly, and the first driving assembly is used to drive the first tab pressing plate to move so that the first tab pressing plate presses the tab of the battery cell onto the terminal post of the battery cell; the welding assembly is configured to weld the tab portion and the terminal post that are pressed together.

In this way, the battery cell is arranged on the battery cell fixing assembly in a lying-down state (that is, the tab portion and the terminal post are oriented horizontally), then the tab portion is pressed through the first tab pressing plate, and welded through the welding assembly, so that welding slag in the welding process is not easy to enter the interior of the battery cell under the action of gravity.

The battery cell disclosed in the embodiments of the present application can be used in an electrical apparatus that uses a battery cell (also known as cell or battery) as the power source or in various energy storage systems that use battery cells as energy storage elements. The electrical apparatus can be but not limited to mobile phones, tablet computers, laptops, electric toys, electric tools, battery vehicles, electric vehicles, ships, spacecrafts, etc. The electric toy may include fixed or mobile electric toys, such as a game machine, an electric vehicle toy, an electric ship toy, and an electric airplane toy, etc. The spacecraft may include an airplane, a rocket, a space shuttle and a spaceship, etc. The terminal post welding device disclosed in the embodiments of the present application can be used to weld the tab portion and terminal post of a battery cell. The battery assembling system disclosed by the embodiments of the present application can be used to assemble the aforementioned battery cell.

In the embodiments of the present disclosure, the battery cell may be a secondary battery. The secondary battery refers to a battery cell that can be continuously used by activating an active material by charging after the battery cell is discharged. Each battery cell may also be a primary battery. The battery cell includes, but is not limited to, a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery, and the like.

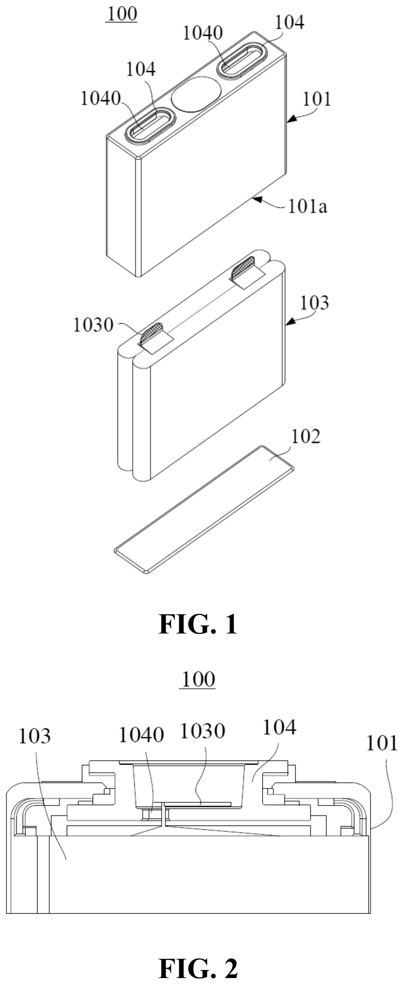

Referring to FIG. 1 and FIG. 2, according to one or more embodiments of the present application, a battery cell 100 may comprise a case 101, a bottom cover 102, and an electrode assembly 103. The case 101 has an open end 101a. A terminal post 104 is arranged on a wall of the case 101 opposite to the open end 101a. The terminal post 104 has a through hole 1040. The case 101 and the bottom cover 102 are connected to form an accommodating cavity communicating with the through hole 104. An active material coating portion of the electrode assembly 103 is arranged in the case 101. A tab portion 1030 of the electrode assembly 103 passes through the through hole 1040 and is connected to a side of the terminal post 104 away from the accommodating cavity.

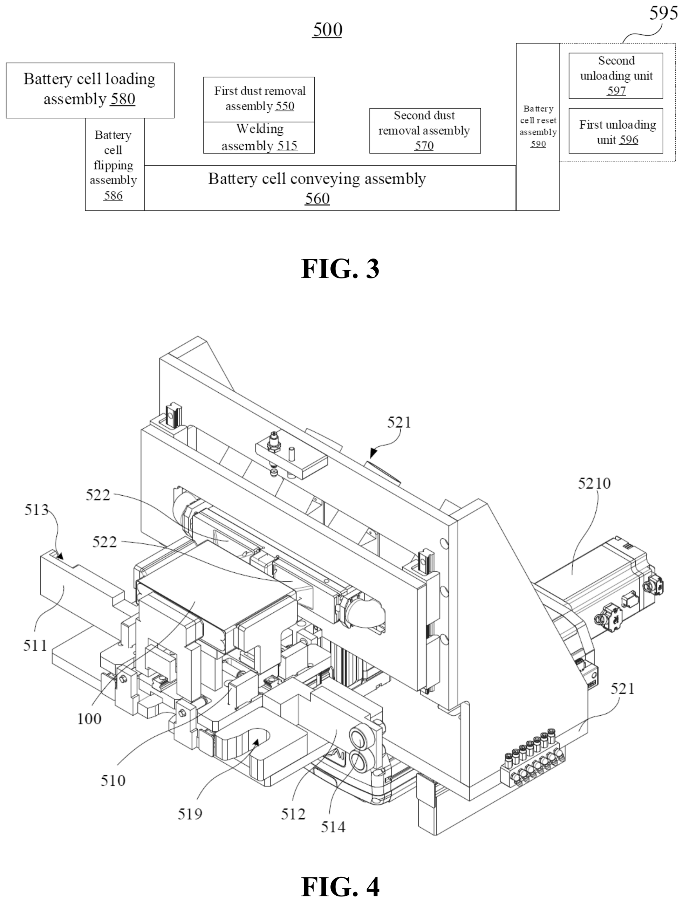

Referring to FIG. 3, FIG. 4 and FIG. 5, a terminal post welding device 500 may comprise: a battery cell fixing assembly 510, a first tab pressing plate unit 520a and a welding assembly 515, the battery cell fixing assembly 510 is used to support and fix a battery cell 100 arranged in a lying-down state; the first tab pressing plate unit 520a comprises a first driving assembly 521 and a first tab pressing plate 522, the first tab pressing plate 522 is mounted on the first driving assembly 521, and the first driving assembly 521 is used to drive the first tab pressing plate 522 to move so that the first tab pressing plate 522 presses the tab portion 1030 of the battery cell 100 onto the terminal post 104 of the battery cell; the welding assembly 515 is configured to weld the tab portion 1030 and the terminal post 104 that are pressed together.

The battery cell being arranged in a lying-down state may refer to the tab portion 1030 and the terminal post 104 of the battery cell being oriented horizontally. In this way, the battery cell is arranged on the battery cell fixing assembly 510 in a lying-down state (that is, the tab portion 1030 and the terminal post 104 are oriented horizontally), then the tab portion 1030 is pressed through the first tab pressing plate 522, and welded through the welding assembly 515, so that welding slag in the welding process is not easy to enter the interior of the battery cell under the action of gravity. The first driving assembly 521 may comprise one or two drive motors 5210.

In some embodiments, the first driving assembly 521 is configured to: drive the first tab pressing plate 522 to perform a first movement so that the tab portion 1030 is pre-bent by the first tab pressing plate 522; and drive the first tab pressing plate 522 to perform a second movement so that the tab portion 1030 is pressed onto the terminal post 104 by the first tab pressing plate 522; the welding assembly 515 is configured to: provide welding energy to the tab portion 1030 and the terminal post 104 when the first tab pressing plate 522 presses the tab portion 1030 onto the terminal post 104.

The pre-bending may mean that the tab portion 1030 is not pressed against and attached to the surface of the terminal post 104, and a preset angle is formed between the tab portion 1030 and the surface of the terminal post 104. The preset angle may range from 15 degrees to 75 degrees. Driving the first tab pressing plate 522 to perform a first movement may refer to driving the first tab pressing plate 522 to move from one side of the tab portion 1030 toward the other side of the tab portion 1030. During this process, the tab portion 1030 may be pre-bent under the action of the first tab pressing plate 522. Driving the first tab pressing plate 522 to perform a second movement may refer to driving the first tab pressing plate 522 to move toward the surface of the terminal post 104 until the first tab pressing plate 522 presses the tab portion 1030 onto the surface of the terminal post 104. The welding assembly 515 can weld the tab portion 1030 and the terminal post 104 by laser or ultrasonic wave.

One of the two drive motors 5210 can be used to drive the first tab pressing plate 522 to perform a first movement. The other of the two drive motors 5210 can be used to drive the first tab pressing plate 522 to perform a second movement. The movement directions of the first movement and the second movement may be perpendicular to each other. When the battery cell 100 is arranged in a lying-down state, the first movement may be a top-down movement, and the second movement may be a horizontal movement.

According to one or more embodiments of the present application, the first driving assembly 521 is so configured that, after a drive motor 5210 that drives the first tab pressing plate 522 to perform a first movement drives the first tab pressing plate 522 to pre-bend the tab portion 1030, a drive motor 5210 that drives the first tab pressing plate 522 to perform a second movement drives a support frame to drive the first tab pressing plate 522 to press the tab portion 1030 onto the terminal post 104 of the battery cell 100; wherein the drive motor 5210 that drives the first tab pressing plate 522 to perform the first movement is mounted on the support frame. Alternatively, the first driving assembly 521 is so configured that, while a drive motor 5210 that drives the first tab pressing plate 522 to perform a first movement drives the first tab pressing plate 522 to pre-bend the tab portion 1030, a drive motor 5210 that drives the first tab pressing plate 522 to perform a second movement drives a support frame to drive the first tab pressing plate 522 to press the tab portion 1030 onto the terminal post 104 of the battery cell 100.

That is, the two drive motors 5210 can operate in sequence or simultaneously.

In this way, by pre-bending the tab portion 1030 before bending, the possibility of wrinkles being generated in the tab portion 1030 during the bending process can be reduced. Moreover, when the two drive motors 5210 move simultaneously, it is conducive to improving the bending efficiency of the tab portion 1030; and it is more conducive to reducing the possibility of wrinkles being generated in the tab portion 1030 during the bending process. This is because the simultaneous movement of the two drive motors 5210 will generate a force on the tab portion 1030 to be bent that is always away from the root of the tab portion 1030, thereby preventing the tab portion 1030 from moving in the opposite direction during the bending process, improving the bending effect of the tab portion.

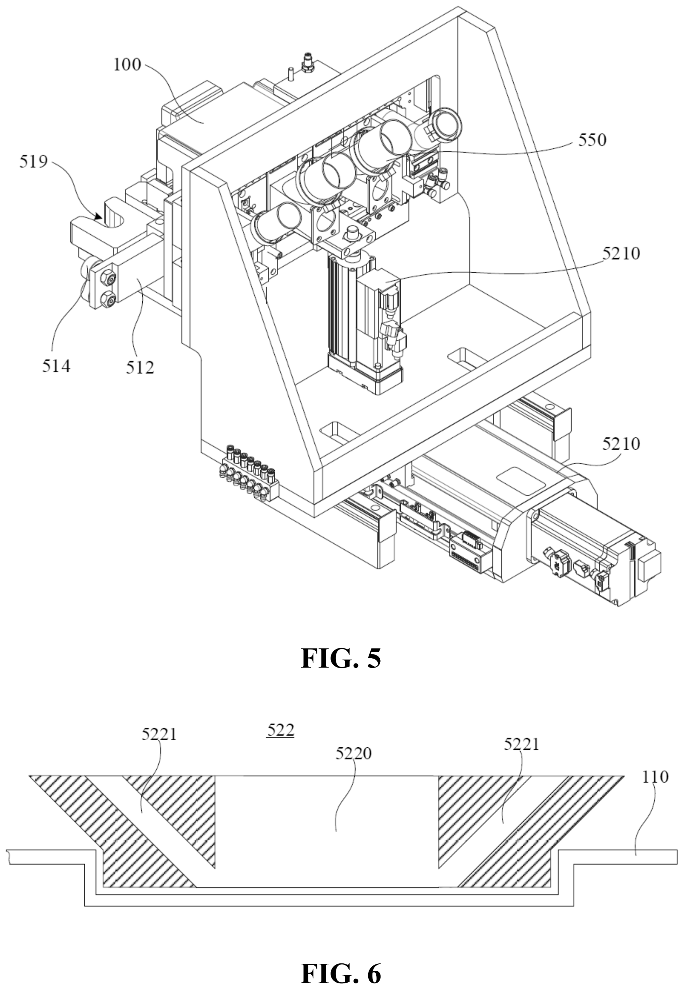

Referring to FIG. 6, in some embodiments, the first tab pressing plate 522 defines a hollow area 5220, and when the first tab pressing plate 522 presses the tab portion 1030 onto the terminal post 104, the hollow area 5220 exposes an area to be welded of the tab portion 1030; the welding assembly 515 comprises a laser, the laser is used to emit laser and irradiate the laser through the hollow area 5220 and onto the area to be welded.

In this way, the tab portion 1030 can be welded when the first tab pressing plate 522 is pressed on the surface of the tab portion 1030, thereby reducing the possibility that the tab portion 1030 rebounds after being separated from the first tab pressing plate 522 and the welding quality is further reduced.

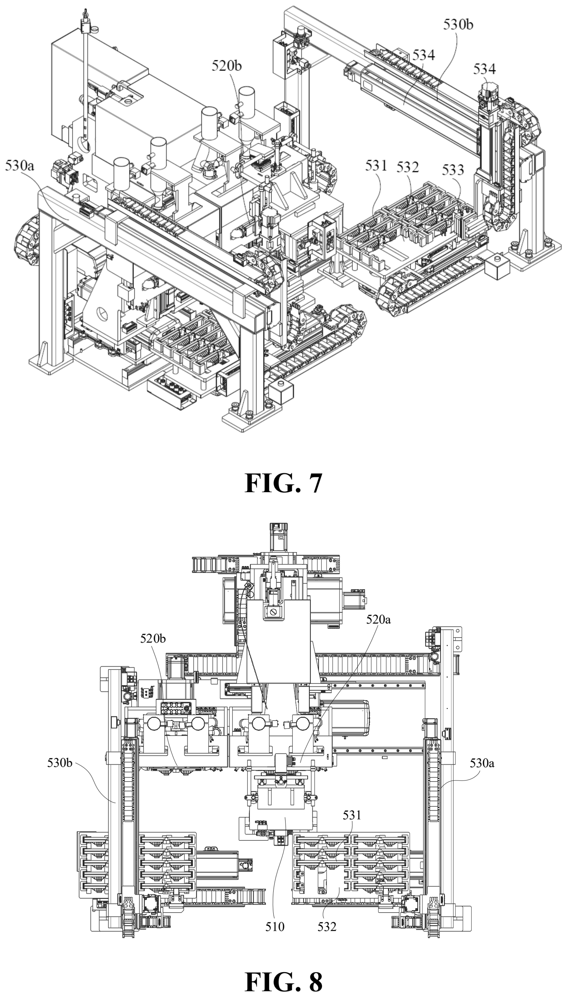

Referring to FIG. 7 and FIG. 8, in some embodiments, the terminal post welding device 500 further comprises a second tab pressing plate unit 520b, the second tab pressing plate unit 520b has the same structure as the first tab pressing plate unit 520a, and the first tab pressing plate unit 520a and the second tab pressing plate unit 520b operate alternately; the terminal post welding device 500 is provided with a welding station, a first pressing plate replacing station and a second pressing plate replacing station, and the first pressing plate replacing station and the second pressing plate replacing station are respectively located on opposite sides of the welding station; the welding assembly 515 is arranged corresponding to the welding station, the first tab pressing plate unit 520a is configured to be capable of being driven to switch and move between the welding station and the second pressing plate replacing station, and the second tab pressing plate unit 520b is configured to be capable of being driven to switch and move between the welding station and the first pressing plate replacing station; the terminal post welding device 500 further comprises a first pressing plate replacing assembly 530a and a second pressing plate replacing assembly 530b; the first pressing plate replacing assembly 530a is arranged at the first pressing plate replacing station, and is used for replacing the first tab pressing plate 522 in the second tab pressing plate unit 520b located at the first pressing plate replacing station; the second pressing plate replacing assembly 530b is arranged at the second pressing plate replacing station, and is used for replacing the first tab pressing plate 522 in the first tab pressing plate unit 520a located at the second pressing plate replacing station.

The first tab pressing plate unit 520a and the second tab pressing plate unit 520b described in the present application are only different in naming for the convenience of description. The first tab pressing plate unit 520a and the second tab pressing plate unit 520b operate alternately, which may mean that when the first tab pressing plate unit 520a is at the welding station to bend the tab of the battery cell, the second tab pressing plate unit 520b is in an idle state (for example, it may be at the first pressing plate replacing station). Similarly, when the second tab pressing plate unit 520b is at the welding station to bend the tab portion 1030 of the battery cell, the first tab pressing plate unit 520a may be in an idle state (for example, it may be at the second pressing plate replacing station).

In this way, when the first tab pressing plate unit 520a needs to be cleared up or replaced, it can be moved from the welding station to the first pressing plate replacing station through the first pressing plate replacing assembly 530a, and the second tab pressing plate unit 520b can be moved from the second pressing plate replacing station to the welding station through the second pressing plate replacing assembly 530b to perform bending operation in place of the first tab pressing plate unit 520a, thereby reducing the downtime of the terminal post welding device 500 during the replacement of the first tab pressing plate unit 520a and improving production efficiency.

In some embodiments, every time the first tab pressing plate unit 520a bents the tab portion 1030 of a battery cell and the welding assembly 515 welds the tab portion 1030 of the battery cell, the first tab pressing plate unit 520a can be moved from the welding station to the second pressing plate replacing station for cooling, and at this point the second tab pressing plate unit 520b can be moved from the first pressing plate replacing station to the welding station to bend the tab portion of the next battery cell. Similarly, after the second tab pressing plate unit 520b bends the tab portion of a battery cell and the welding assembly 515 welds the tab portion 1030 of the battery cell, it can be moved to the first pressing plate replacing station for cooling, and the first tab pressing plate unit 520a can be moved to the welding station again. In this way, the first tab pressing plate unit 520a and the second tab pressing plate unit 520b can be cooled in time, reducing the possibility of heat accumulation during welding, thereby increasing the service life of the first tab pressing plate unit 520a and the second tab pressing plate unit 520b. In other embodiments, the first tab pressing plate unit 520 can also operate continuously at the welding station to bend the tab portions 1030 of a plurality of battery cells in sequence, then move away from the welding station, and then the second tab pressing plate unit 520b is moved to the welding station to operate continuously.

In some embodiments, the first pressing plate replacing assembly 530a/the second pressing plate replacing assembly 530b comprise a first pressing plate storage bin 531 and a first pressing plate waste bin 532, the first pressing plate storage bin 531 is used to store the first tab pressing plate 522 to be replaced, and the first pressing plate waste bin 532 is used to store the replaced first tab pressing plate 522.

The first pressing plate storage bin 531 and the first pressing plate waste bin 532 may be located in the same box body. A plurality of tab pressing plate storage areas may be provided inside the box body, and each tab pressing plate storage area may be used as a first pressing plate storage bin 531 or a first pressing plate waste bin 532.

In this way, the operator can regularly store a certain number of first tab pressing plates 522 in the first pressing plate storage bin 531 and clear away the first tab pressing plates 522 in the first pressing plate waste bin 532, so that the terminal post welding device 500 can maintain normal operation for a period of time.

The first pressing plate replacing assembly 530a/the second pressing plate replacing assembly 530b may comprise a tab pressing plate clamp 533 and at least one motor 534. The tab pressing plate clamp 533 may be used to pick up the first tab pressing plate 522. The at least one motor 534 may drive the tab pressing plate clamp 533 to move, for example, drive the tab pressing plate clamp 533 to remove the first tab pressing plate 522 of the first tab pressing plate unit 520a located at the second pressing plate replacing station and move it to the first pressing plate waste bin 532, or to remove the first tab pressing plate 522 in the first pressing plate storage bin 531, move it to the first pressing plate replacing station and complete the corresponding assembling. The number of the motors 534 may be two or three, and the directions in which the two or three motors 534 drive the tab pressing plate clamp 533 to move may be perpendicular to each other.

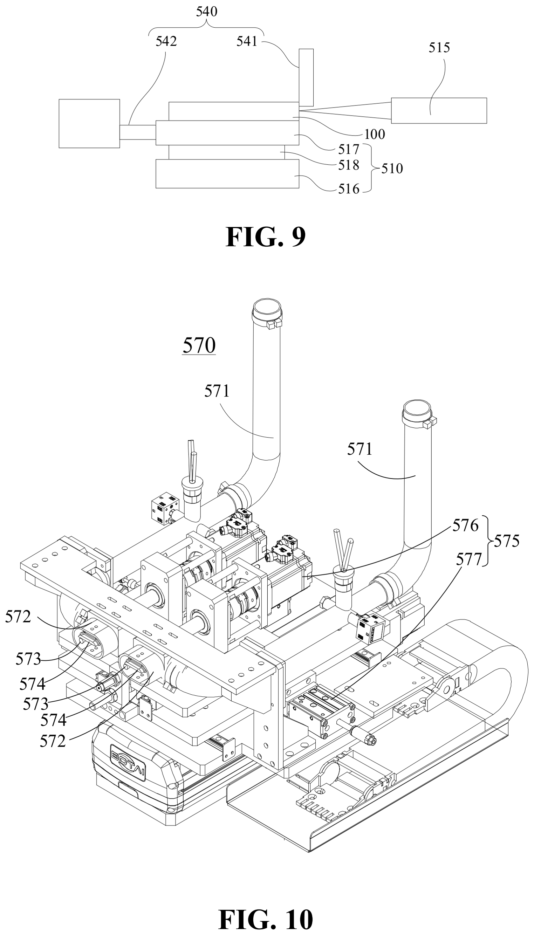

Referring to FIG. 9, in some embodiments, the terminal post welding device 500 further comprises a reference assembly 540, the reference assembly 540 is arranged corresponding to the welding assembly 515 and comprises a reference plate unit 541 and a pushing unit 542; the reference plate unit 541 is configured to: move to a position between the welding assembly 515 and the battery cell fixing assembly 510 when the battery cell fixing assembly 510 moves to correspond to the corresponding welding assembly 515; the pushing unit 542 is configured to: push the battery cell fixing assembly 510 and/or the battery cell to abut against the reference plate unit 541 when the reference plate unit 541 moves to a position between the welding assembly 515 and the battery cell fixing assembly 510.

That is, the reference plate unit 541 can be relatively fixed, and the pushing unit 542 can move horizontally relative to the reference plate unit 541 and drive the battery cell fixing assembly 510 to move. The battery cell fixing assembly 510 may include a base 516 and a battery cell carrying portion 517, and the battery cell carrying portion 517 may be movably arranged on the base 516. The base 516 may be provided with a guide rail 518, and the extension direction of the guide rail 518 may be a direction from one side of the base toward the other side, or parallel to the direction of the terminal post 104 of the battery cell provided on the battery cell fixing assembly 510. The battery cell carrying portion 517 may be slidably arranged on the guide rail 518 of the base 516.

The reference plate unit 541 may provide a reference plane, the reference plane may be coplanar with or parallel to the welding plane (focal plane) of the welding assembly 515 (e.g., a laser), so that when the battery cell fixing assembly 510/battery cell abut against the reference plane, the bent surface of the battery cell's tab portion 1030 is located within the welding plane.

In this way, the battery cell is positioned by the reference assembly 540, so that the battery cell can be accurately positioned in the area to be welded.

In some embodiments, the terminal post welding device 500 further comprises a code scanning assembly (not shown), the code scanning assembly is used to perform code scanning on the battery cell fixing assembly 510 that supports and fixes the battery cell and the first tab pressing plate unit 520a that presses the tab portion of the same battery cell.

In this way, the number of times that each first tab pressing plate unit 520a bends the tab portion can be conveniently counted, which is conducive to timely replacement of the first tab pressing plate 522.

In some embodiments, the terminal post welding device 500 further comprises a first dust removal assembly 550 (shown in FIG. 3), the first dust removal assembly 550 is mounted on the first tab pressing plate unit 520a; when the welding assembly 515 welds the tab portion 1030 and the terminal post 104 that are pressed together, the first dust removal assembly 550 communicates with the gas in the area where the tab portion 1030 is located.

The first dust removal assembly 550 may comprise a suction device and a connecting duct. A gas channel 5221 may be provided inside the first tab pressing plate 522. One end of the gas channel 5221 can communicate with the connecting duct, and the other end passes through the surface of a side of the first tab pressing plate 522 facing the tab portion, so that the first dust removal assembly 550 can suck and clear away the welding slag, dust or smoke generated by the tab portion during the welding process through the connecting duct and the gas channel 5221. In addition, the gas channel 5221 may also communicate with the hollow area 5220.

In this way, the welding slag, smoke and dust generated during the welding process can be preliminarily cleared away.

Referring to FIG. 1 and FIG. 10, in some embodiments, the terminal post welding device 500 further comprises a battery cell conveying assembly 560 and a second dust removal assembly 570. The battery cell conveying assembly 560 is used to drive the battery cell fixing assembly 510 to move from the first tab pressing plate unit 520a toward the second dust removal assembly 570. The second dust removal assembly 570 is used to remove dust from the welding area of the tab portion 1030.

In this way, the welding slag and dust remaining in the battery cell after welding can be further cleared away.

In some embodiments, the second dust removal assembly 570 comprises a dust removal duct 571 and a dust removal hood 572. The dust removal duct 571 is used to communicate with an exhaust assembly. The dust removal hood 572 communicates with the dust removal duct 571 and is used to press onto the terminal post 104 of the battery cell to form an exhaust space between the terminal post 104 and the dust removal hood 572.

In this way, the second dust removal assembly 570 can absorb and collect welding slag and dust for easy cleaning.

In some embodiments, the second dust removal assembly 570 further comprises a moving brush 573, the moving brush 573 is arranged in the dust removal hood 572 for contacting the welding area of the tab portion 1030 and moving; and/or the dust removal hood 572 comprises a plug 574, and the plug 574 is used for blocking at least a portion of the through hole 1040 of the terminal post 104.

The second dust removal assembly 570 may further comprise a driving assembly 575, and the driving assembly 575 may comprise a first drive motor 576 for driving the moving brush 573 to rotate. The moving brush 573 can be connected to the output shaft of the first drive motor 576, so that the first drive motor 576 can drive the moving brush 573 to rotate and clean the surface of the tab portion 1030 during the rotation. In order to improve the firmness of welding, the weld mark area formed by welding may be relatively large, so that the moving brush 573 can also move along the surface of the tab portion 1030 to comprehensively clean the surface of the tab portion 1030. The driving assembly 575 may further comprise a second drive motor 577 for driving the moving brush 573 to move along the surface of the tab portion 1030/the terminal post 104. The moving brush 573 is movably arranged in the dust removal hood 572. The first drive motor 576 may be arranged on the second drive motor 577, so that the second drive motor 577 can drive the first drive motor 576 to translate, thereby driving the moving brush 573 to move along the surface of the tab portion 1030.

The plug 574 may be a rubber plug, and the shape of the plug 574 may be the same as the shape of the through hole 1040, so that when it is inserted into the through hole 1040, the probability of welding slag, smoke and dust entering the through hole 1040 is reduced. In this way, the moving brush 573 can further improve the efficiency of removing welding slag, and the plug 574 can reduce the possibility of welding slag, smoke and dust entering the battery cell through the through hole 1040.

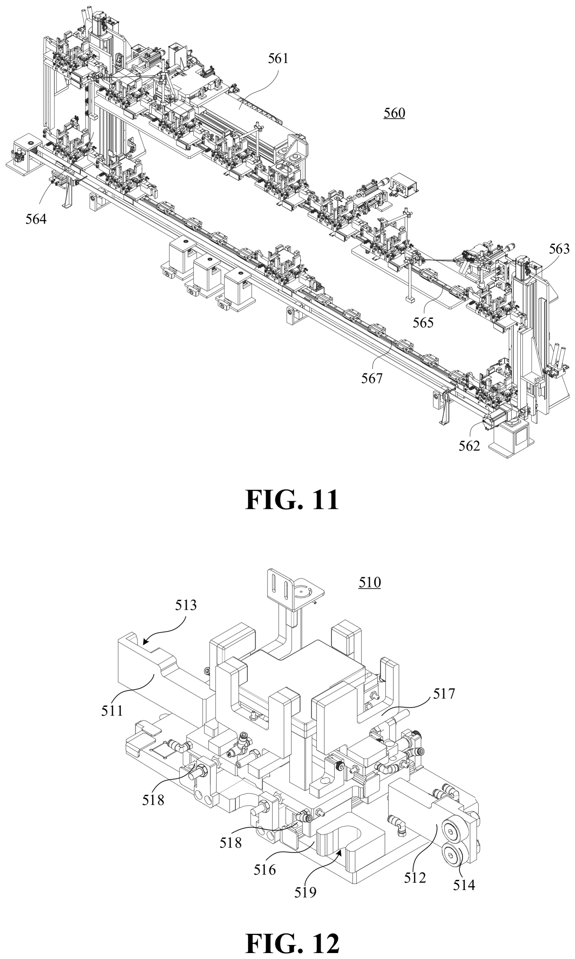

Referring to FIG. 11, in some embodiments, the battery cell conveying assembly 560 is configured to convey the battery cell fixing assembly 510 along a circulation path, the circulation path comprises an upper path, a descending path, a lower path and an ascending path connected in sequence; and the battery cell conveying assembly 560 is configured to: when the battery cell fixing assembly 510 enters the descending path from the upper path, drive the battery cell fixing assembly 510 to convey it along the descending path toward the lower path in a translational manner; when the battery cell fixing assembly 510 enters the ascending path from the lower path, drive the battery cell fixing assembly 510 to convey it along the ascending path toward the upper path in a translational manner.

The upper path may be located above the lower path, and the descending path and the ascending path may be located at the head end and tail end of the upper path and the lower path respectively. The extension direction of the descending path can be vertically downward or obliquely downward. The extension direction of the ascending path can be vertically upward or obliquely upward.

In this way, the battery cell conveying assembly 560 can receive the battery cells cyclically and convey the battery cells to the first pressing plate unit.

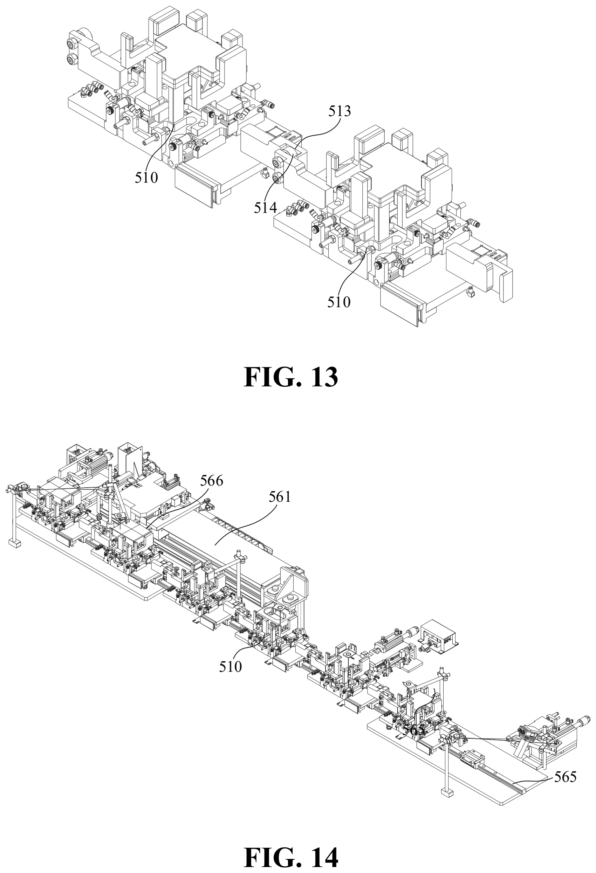

Referring to FIG. 12 and FIG. 13, in some embodiments, the head end of the battery cell fixing assembly 510 is used to connect the tail end of the adjacent battery cell fixing assembly 510, and the battery cell fixing assemblies 510 are configured to: lock with each other along the direction from the head end to the tail end and be relatively movable along a direction perpendicular to the direction from the head end to the tail end.

That is, the head end of each battery cell fixing assembly 510 may be connected to the tail end of the previous adjacent battery cell fixing assembly 510, and the tail end may be connected to the head end of the next adjacent battery cell fixing assembly 510. The battery cell fixing assemblies 510 are configured to lock with each other in the direction from the head end to the tail end, which means that when two adjacent battery cell fixing assemblies 510 are connected together, if a force from the head end to the tail end is applied to one of them, the other will move synchronously and they will not be easily separated. The battery cell fixing assembly 510 is configured to be relatively movable along a direction perpendicular to the direction from the head end to the tail end, which means that when two adjacent battery cell fixing assemblies 510 are connected together, a force perpendicular to the direction from the head end to the tail end is applied to one of them, and the battery cell fixing assembly 510 will move relative to the other battery cell fixing assembly 510, or even they are separated from each other.

A battery cell fixing assembly 510 located in the upper path can move along a direction perpendicular to the battery cell fixing assembly 510 in the upper path (for example, the direction of the descending path) after moving to the end point, and then the battery cell fixing assembly 510 is separated from other battery cell fixing assemblies 510 located in the upper path and enters the descending path. Similarly, the battery cell fixing assembly 510 can enter the ascending path from the lower path using the same principle.

In this way, the battery cell fixing assemblies 510 can be separably connected. When connected, the connected battery cell fixing assemblies 510 can move synchronously. After being separated, the battery cell fixing assemblies 510 can enter different paths among the upper path, the descending path, the lower path and the ascending path, respectively.

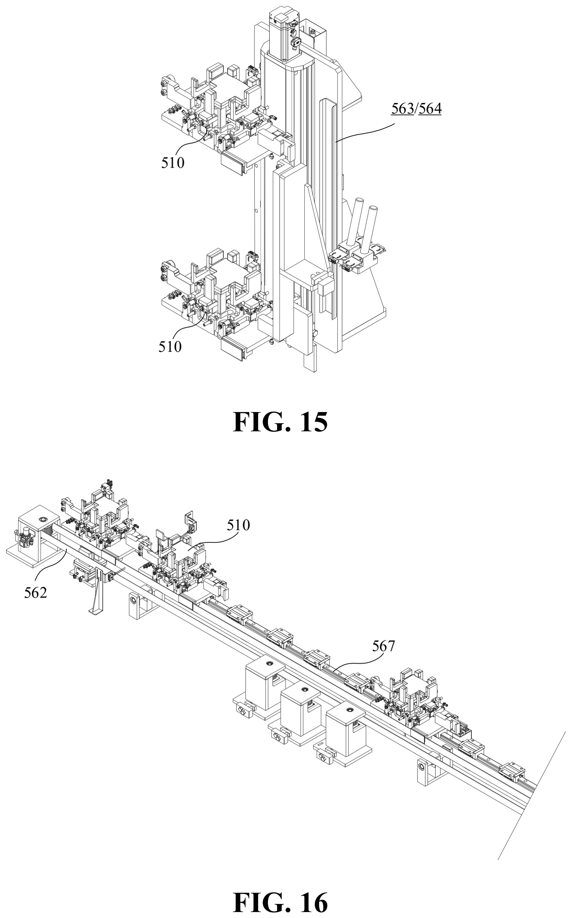

Referring to FIG. 14, FIG. 15 and FIG. 16, in some embodiments, the battery cell conveying assembly 560 comprises: a first drive unit 561, a second drive unit 562, a first lifting unit 563 and a second lifting unit 564, the first drive unit 561 is used to drive at least one battery cell fixing assembly 510 located in the upper path to move along the upper path, so that all battery cell fixing assemblies 510 located in the upper path move along the upper path, the first lifting unit 563 is arranged at the tail end of the upper path, and is used to drive the battery cell fixing assembly 510 to separate from the battery cell fixing assembly 510 located in the upper path, enter the descending path, and connect with the battery cell fixing assembly 510 located in the lower path, the second drive unit 562 is used to drive at least one battery cell fixing assembly 510 located in the lower path to move along the lower path, so that all battery cell fixing assemblies 510 located in the lower path move along the lower path; the second lifting unit 564 is arranged at the head end of the upper path, and is used to drive the battery cell fixing assembly 510 to separate from the battery cell fixing assembly 510 located in the lower path, enter the ascending path, and connect with the battery cell fixing assembly 510 located in the upper path.

After moving to the end point of the upper path, the battery cell fixing assembly 510 can descend under the action of gravity and the first lifting unit 563, and in the process of descending, it will be separated from other battery cell fixing assemblies 510 located in the upper path, and then move to the starting point of the lower path, and can be connected with other battery cell fixing assemblies 510 in the lower path. After moving to the end point of the lower path, the battery cell fixing assembly 510 can ascend under the action of the second lifting unit 564, and in the process of ascending, it will be separated from other battery cell fixing assemblies 510 located in the lower path, and then move to the starting point of the upper path, and can be connected with other battery cell fixing assemblies 510 in the upper path.

The first drive unit 561 may be a drive motor. The battery cell conveying assembly 560 may further comprise a first guide unit 565 located in the upper path. The first drive unit 561 can drive the battery cell fixing assembly 510 located in the upper path to move along the first guide unit 565. The first guide unit 565 may be a guide rail. The battery cell fixing assembly 510 may further comprise a first limiting area 519, and the first drive unit 561 may have a first drive block 566. The first drive block 566 may translate under the action of the first drive unit 561 and may be detachably embedded in the first limiting area 519, thereby driving the battery cell fixing assembly 510 to move.

The second drive unit 562 may be a conveyor belt, which may drive the battery cell conveying assembly 560 to move through friction, and may also play a certain guiding role by itself. Of course, the battery cell conveying assembly 560 may further comprise a second guide unit 567 located in the lower path. The second drive unit 562 can drive the battery cell fixing assembly 510 located in the lower path to move along the second guide unit 567. The second guide unit 567 may also be a guide rail.

The first drive block 566 can be embedded in the first limiting area 519 of one of the battery cell fixing assemblies 510, and synchronously drive the battery cell fixing assembly 510 and other battery cell fixing assemblies 510 located in the upper path to move synchronously during the movement along the first guide unit 565. After moving to a preset distance, the first drive block 566 can be separated from the battery cell fixing assembly 510 and reset, and then can be embedded in the first limiting area 519 of other battery cell fixing assemblies 510 located in the upper path again, and drive the battery cell fixing assembly 510 to move along the first guide unit 565.

In this way, compared with the case where the various paths of the battery cell conveying assembly 560 are arranged on the same horizontal plane, the floor space occupied by the battery cell conveying assembly 560 can be reduced.

In some embodiments, the battery cell fixing assembly 510 has a first connecting portion 511 located at the head end and a second connecting portion 512 located at the tail end, one of the first connecting portion 511 and the second connecting portion 512 is provided with a limiting slide groove, the extension direction of the limiting slide groove is perpendicular to the direction from the head end to the tail end, and the other is provided with a roller 514 slidably arranged in the limiting slide groove, so that when any two battery cell fixing assemblies 510 are connected, they are relatively locked in the direction from the head end to the tail end, and can slide relatively in the direction along the extension direction of the limiting slide groove.

In this case, in the direction from the head end to the tail end, the roller 514 of the battery cell fixing assembly 510 is limited by the limiting sliding grooves of the connected battery cell fixing assemblies 510, so that the two battery cell fixing assemblies 510 are not easily separated in this direction. In an extension direction parallel to the limiting sliding groove, the roller 514 of the battery cell fixing assembly 510 can move along the limiting sliding groove, so that the two move relative to each other and gradually separate.

In this way, the friction of the battery cell fixing assembly 510 during the separation process can be reduced, so that the battery cell fixing assembly 510 is easier to separate. In addition, the use of the roller 514 can also reduce the probability of failure of the battery cell fixing assembly 510 to connect when the battery cell fixing assemblies 510 are not aligned during the connection process.

In some embodiments, the terminal post welding device 500 further comprises a photographing assembly (not shown), the battery cell conveying assembly 560 is used to drive the battery cell fixing assembly 510 to move from the second dust removal assembly 570 toward the photographing assembly, the photographing assembly comprises a 2D camera system and/or a 3D camera system, the 2D camera system is used to take pictures of the terminal posts 104 that have been welded, and the 3D camera system is used to perform 3D contour line scanning on the terminal posts 104 that have been welded.

In this way, defects such as weld marks and weld mark height after welding of the tab portion 1030 can be identified.

In some embodiments, the first tab pressing plate 522 is made of tungsten steel.

In this way, the strength and heat resistance of the first tab pressing plate 522 can be improved.

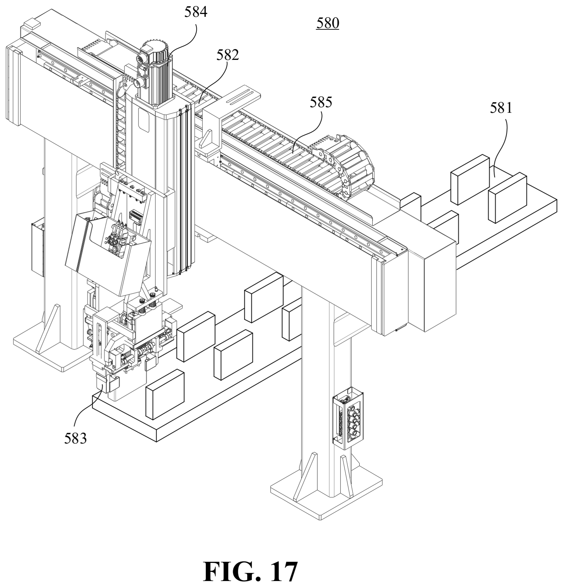

Referring to FIG. 17, in some embodiments, the terminal post welding device 500 further comprises a battery cell loading assembly 580 and a battery cell flipping assembly 586; the battery cell loading assembly 580 is used to support the battery cells arranged upright and transport the battery cells toward the battery cell flipping assembly 586; the battery cell flipping assembly 586 is used to clamp the battery cells arranged upright, flip the battery cells to a lying-down state, and place the battery cells arranged in a lying-down state onto the battery cell fixing assembly 510.

The battery cell loading assembly 580 may comprise a conveying unit 581 and a loading robot arm 582. The conveying unit 581 may be a conveyor belt or a logistics vehicle. The loading robot arm 582 may comprise a battery cell clamping claw 583, a first transfer motor 584 and a second transfer motor 585. The battery cell clamping claw 583 may be arranged on the first transfer motor 584. The first transfer motor 584 may be arranged on the second transfer motor 585. The first transfer motor 584 can drive the battery cell clamping claw 583 to move up and down so as to pick up the battery cell from the conveying unit 581. The second transfer motor 585 can drive the first transfer motor 584 and the battery cell clamping claw 583 to perform horizontal movement to transfer the picked-up battery cell to the battery cell flipping assembly 586.

The battery cell flipping assembly 586 may comprise a battery cell clamp and a flipping robot arm. The flipping robot arm may comprise at least one rotating motor, thereby driving the battery cell clamp and the battery cell clamped in the battery cell clamp to flip to a lying-down state.

In this way, the battery cells can be automatically flipped, thereby improving the loading efficiency.

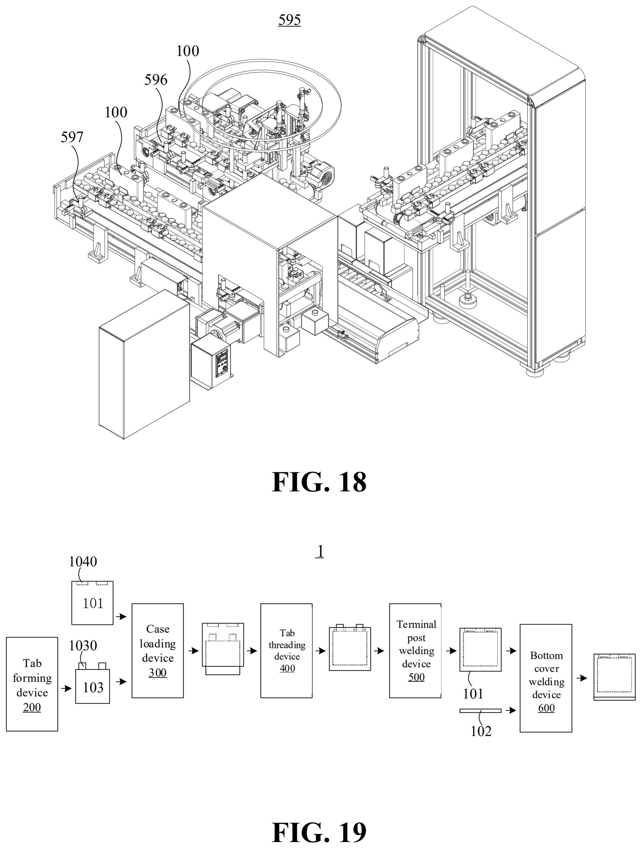

Referring to FIG. 1 and FIG. 18, in some embodiments, the terminal post welding device 500 may further comprise a battery cell reset assembly 590 and a battery cell unloading assembly 595. The battery cell unloading assembly 595 may comprise a first unloading unit 596 and a second unloading unit 597. The first unloading unit 596 can be used to transfer qualified battery cells and can also be called an unloading pull belt. The second unloading unit 597 can be used to transfer unqualified battery cells and can also be called an NG pull belt. The first unloading unit 596/the second unloading unit 597 can be a conveyor belt or a logistics vehicle. The battery cell reset assembly 590 may include at least one linear motor, at least one rotary motor, and a battery cell pickup mechanism. The battery cell pickup mechanism can be used to pick up the battery cells located in the battery cell fixing assembly 510. The linear motor can be used to drive the battery cell pickup mechanism to move between the battery cell conveying assembly 560, the first unloading unit 596 and the second unloading unit 597, and the rotary motor can drive the battery cell pickup mechanism to rotate to flip the battery cell from a lying-down state to an upright state.

Referring to FIG. 19, an embodiment of the present application further provides a battery assembling system 1, which comprises the above-mentioned terminal post welding device 500. A battery cell 100 may comprise a case 101, a bottom cover 102, and an electrode assembly 103. The case 101 has an open end 101a. A terminal post 104 is arranged on a wall of the case 101 opposite to the open end 101a. The terminal post 104 has a through hole 1040. The case 101 and the bottom cover 102 are connected to form an accommodating cavity communicating with the through hole 104. An active material coating portion of the electrode assembly 103 is arranged in the case 101. A tab portion 1030 of the electrode assembly 103 passes through the through hole 1040 and is connected to a side of the terminal post 104 away from the accommodating cavity. The battery assembling system 1 further comprises a conveying device and an assembling device, wherein the conveying device is used to convey the structure to be assembled to the stations of the assembling device; the station of the assembling device comprises at least a terminal post welding device; wherein the terminal post welding device is used to weld the tab portion 1030 passing through the through hole 1040 to a side of the terminal post 104 away from the accommodating cavity.

In some embodiments, the battery assembling system 1 further comprises a tab forming device 200, a case loading device 300, a tab threading device 400 and a bottom cover welding device 600; wherein the tab forming device 200 is used to weld a plurality of tab sheets of the electrode assembly to form a tab portion 1030; the case loading device 300 is used to load the electrode assembly into the case from the open end; the tab threading device 400 is used to clamp the tab portion 1030 to pass through the through hole 1040 when the electrode assembly is loaded into the case; the bottom cover welding device 600 is used to weld the bottom cover to the open end of the case.

It should be noted that, in this embodiment, the conveying device comprises a conveying line, the conveying line can be a conveying structure formed by a conveyor roller driven by a motor in conjunction with a conveyor belt, or a conveying structure formed by hinged motor-driven conveyor chain links, or an AGV conveyor cart, which can realize conveying in at least one direction and can support and ensure the stability of the structure to be assembled.

The purpose of the tab forming device 200 is to form the tab portion after pre-welding the tab sheets, and it is optionally an ultrasonic welding device, which can ensure that the tab portion 1030 is welded when clamped stably. The case loading device 300 is a pushing mechanism or a clamping mechanism, which can stably move the electrode assembly toward the open end of the case and enter the accommodating cavity through the open end. Similarly, the tab threading device 400 may adopt a clamping structure or a guiding structure, which can guide the tab portion 1030 to smoothly pass through the through hole 1040 without interfering with the case. The terminal post welding device 500 is intended to achieve welding between the tab portion 1030 and the terminal post 104, and may be a laser welding device. The bottom cover welding device 600 is intended to achieve circumferential edge welding of the bottom cover and the open end of the case, and is also a laser welding device.

In addition, the assembling device comprises, without limitation, the tab forming device 200, the case loading device 300, the tab threading device 400, the terminal post welding device 500 and the bottom cover welding device 600. Exemplarily, when the number of electrode assemblies is multiple, for example, two, the assembling device further comprises a matching device, the matching device is used to stack the multiple electrode assemblies so that the tabs of the two electrode assemblies are roughly opposite to each other, so that the conveying structure can convey the matched electrode assemblies to the tab forming device 200 for welding the tab sheets to facilitate the formation of the tab portion. As another example, in order to ensure the reliability of the battery assembly process, a dust removal station, an NG detection station, etc. may be added between any two adjacent stations, which is not limited in this embodiment.

An embodiment of the present application provides a terminal post welding device 500, which comprises: a battery cell loading assembly 580 and a battery cell flipping assembly 586, a battery cell fixing assembly 510, a battery cell conveying assembly 560, a first tab pressing plate unit 520a, a second tab pressing plate unit 520b, a first pressing plate replacing assembly 530a, a second pressing plate replacing assembly 530b, a welding assembly 515, a reference assembly 540, a first dust removal assembly 550, a second dust removal assembly 570, a code scanning assembly and a photographing assembly.

The battery cell loading assembly 580 is used to support the battery cells arranged upright and convey the battery cells toward the battery cell flipping assembly 586; the battery cell flipping assembly 586 is used to clamp the battery cells arranged upright, flip the battery cells to a lying-down state, and place the battery cells arranged in a lying-down state onto the battery cell fixing assembly 510.

The battery cell fixing assembly 510 is used to support and fix a battery cell arranged in a lying-down state; the first tab pressing plate unit 520a comprises a first driving assembly 521 and a first tab pressing plate 522, the first tab pressing plate 522 is mounted on the first driving assembly 521, and the first driving assembly 521 is used to drive the first tab pressing plate 522 to move so that the first tab pressing plate 522 presses the tab portion 1030 of the battery cell onto the terminal post 104 of the battery cell; the welding assembly 515 is configured to weld the tab portion 1030 and the terminal post 104 that are pressed together. The first tab pressing plate 522 is made of tungsten steel. The first driving assembly 521 is configured to: drive the first tab pressing plate 522 to perform a first movement so that the tab is pre-bent by the first tab pressing plate 522; and drive the first tab pressing plate 522 to perform a second movement so that the tab portion is pressed onto the terminal post 104 by the first tab pressing plate 522; the welding assembly 515 is configured to: provide welding energy to the tab portion 1030 and the terminal post 104 when the tab pressing plate presses the tab portion 1030 onto the terminal post 104. The first tab pressing plate 522 defines a hollow area 5220, and when the first tab pressing plate 522 presses the tab portion 1030 onto the terminal post 104, the hollow area 5220 exposes an area to be welded of the tab portion 1030; the welding assembly 515 comprises a laser, the laser is used to emit laser and irradiate the laser through the hollow area 5220 and onto the area to be welded.

The second tab pressing plate unit 520b has the same structure as the first tab pressing plate unit 520a, and the first tab pressing plate unit 520a and the second tab pressing plate unit 520b operate alternately; the terminal post welding device 500 is provided with a welding station, a first pressing plate replacing station and a second pressing plate replacing station, and the first pressing plate replacing station and the second pressing plate replacing station are respectively located on opposite sides of the welding station; the welding assembly 515 is arranged corresponding to the welding station, the first tab pressing plate unit 520a is configured to be capable of being driven to switch and move between the welding station and the second pressing plate replacing station, and the second tab pressing plate unit 520b is configured to be capable of being driven to switch and move between the welding station and the first pressing plate replacing station; the first pressing plate replacing assembly 530a is arranged at the first pressing plate replacing station, and is used for replacing the first tab pressing plate 522 in the second tab pressing plate unit 520b located at the first pressing plate replacing station; the second pressing plate replacing assembly 530b is arranged at the second pressing plate replacing station, and is used for replacing the first tab pressing plate 522 in the first tab pressing plate unit 520a located at the second pressing plate replacing station. The first pressing plate replacing assembly 530a comprises a first pressing plate storage bin 531 and a first pressing plate waste bin 532, the first pressing plate storage bin 531 is used to store the first tab pressing plate 522 to be replaced, and the first pressing plate waste bin 532 is used to store the replaced first tab pressing plate 522.

The reference assembly 540 is arranged corresponding to the welding assembly 515 and comprises a reference plate unit 541 and a pushing unit 542; the reference plate unit 541 is configured to move to a position between the welding assembly 515 and the battery cell fixing assembly 510 when the battery cell fixing assembly 510 moves to correspond to the corresponding welding assembly 515; the pushing unit 542 is configured to: push the battery cell fixing assembly 510 and/or the battery cell to abut against the reference plate unit 541 when the reference plate unit 541 moves to a position between the welding assembly 515 and the battery cell fixing assembly 510. The code scanning assembly is used to perform code scanning on the battery cell fixing assembly 510 that supports and fixes the battery cell and the first tab pressing plate unit 520a that presses the tab portion of the same battery cell.

The first dust removal assembly 550 is mounted on the first tab pressing plate unit 520a; when the welding assembly 515 welds the tab portion 1030 and the terminal post 104 that are pressed together, the first dust removal assembly 550 communicates with the gas in the area where the tab portion 1030 is located. The battery cell conveying assembly 560 is used to drive the battery cell fixing assembly 510 to move from the first tab pressing plate unit 520a toward the second dust removal assembly 570. The second dust removal assembly 570 is used to remove dust from the welding area of the tab portion 1030. The second dust removal assembly 570 comprises a dust removal duct 571 and a dust removal hood 572. The dust removal duct 571 is used to communicate with an exhaust assembly. The dust removal hood 572 communicates with the dust removal duct 571 and is used to press onto the terminal post 104 of the battery cell to form an exhaust space between the terminal post 104 and the dust removal hood 572. The second dust removal assembly 570 further comprises a moving brush 573, the moving brush 573 is arranged in the dust removal hood 572 for contacting the welding area of the tab portion 1030 and moving; and/or the dust removal hood 572 comprises a plug 574, and the plug 574 is used for blocking at least a portion of the through hole 1040 of the terminal post 104.

The battery cell conveying assembly 560 is configured to convey the battery cell fixing assembly 510 along a circulation path, the circulation path comprises an upper path, a descending path, a lower path and an ascending path connected in sequence; and the battery cell conveying assembly 560 is configured to: when the battery cell fixing assembly 510 enters the descending path from the upper path, drive the battery cell fixing assembly 510 to convey it along the descending path toward the lower path in a translational manner; when the battery cell fixing assembly 510 enters the ascending path from the lower path, drive the battery cell fixing assembly 510 to convey it along the ascending path toward the upper path in a translational manner. The head end of the battery cell fixing assembly 510 is used to connect the tail end of the adjacent battery cell fixing assembly 510, and the battery cell fixing assemblies 510 are configured to: lock with each other along the direction from the head end to the tail end and be relatively movable along a direction perpendicular to the direction from the head end to the tail end. The battery cell conveying assembly 560 comprises: a first drive unit 561, a second drive unit 562, a first lifting unit 563 and a second lifting unit 564, the first drive unit 561 is used to drive at least one battery cell fixing assembly 510 located in the upper path to move along the upper path, so that all battery cell fixing assemblies 510 located in the upper path move along the upper path, the first lifting unit 563 is arranged at the tail end of the upper path, and is used to drive the battery cell fixing assembly 510 to separate from the battery cell fixing assembly 510 located in the upper path, enter the descending path, and connect with the battery cell fixing assembly 510 located in the lower path, the second drive unit 562 is used to drive at least one battery cell fixing assembly 510 located in the lower path to move along the lower path, so that all battery cell fixing assemblies 510 located in the lower path move along the lower path; the second lifting unit 564 is arranged at the head end of the upper path, and is used to drive the battery cell fixing assembly 510 to separate from the battery cell fixing assembly 510 located in the lower path, enter the ascending path, and connect with the battery cell fixing assembly 510 located in the upper path. The battery cell fixing assembly 510 has a first connecting portion 511 located at the head end and a second connecting portion 512 located at the tail end, one of the first connecting portion 511 and the second connecting portion 512 is provided with a limiting slide groove, the extension direction of the limiting slide groove is perpendicular to the direction from the head end to the tail end, and the other is provided with a roller 514 slidably arranged in the limiting slide groove, so that when any two battery cell fixing assemblies 510 are connected, they are relatively locked in the direction from the head end to the tail end, and can slide relatively in the direction along the extension direction of the limiting slide groove. The battery cell conveying assembly 560 is used to drive the battery cell fixing assembly 510 to move from the second dust removal assembly 570 toward the photographing assembly, the photographing assembly comprises a 2D camera system and/or a 3D camera system, the 2D camera system is used to take pictures of the terminal posts that have been welded, and the 3D camera system is used to perform 3D contour line scanning on the terminal posts that have been welded.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments may still be modified, or some or all of the technical features therein may be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A terminal post welding device, comprising:
a battery cell fixing assembly, used to support and fix a battery cell arranged in a lying -down state;
a first tab pressing plate unit, comprising a first driving assembly and a first tab pressing plate, wherein the first tab pressing plate is mounted on the first driving assembly, and the first driving assembly is used to drive the first tab pressing plate to move so that the first tab pressing plate presses the tab portion of the battery cell onto the terminal post of the battery cell; and
a welding assembly, configured to weld the tab portion and the terminal post that are pressed together.

2. The terminal post welding device according to claim 1, wherein
the first driving assembly is configured to: drive the first tab pressing plate to perform a first movement so that the first tab pressing plate pre-bends the tab; and drive the first tab pressing plate to perform a second movement so that the first tab pressing plate presses the tab portion onto the terminal post;
the welding assembly is configured to: provide welding energy to the tab portion and the terminal post when the first tab pressing plate presses the tab portion onto the terminal post.

3. The terminal post welding device according to claim 1, wherein
the first tab pressing plate defines a hollow area, and when the first tab pressing plate presses the tab portion onto the terminal post, the hollow area exposes an area to be welded of the tab portion;
the welding assembly comprises a laser, the laser is used to emit laser light and irradiate the laser light through the hollow area to the area to be welded.

4. The terminal post welding device according to claim 1, wherein
the terminal post welding device further comprises a second tab pressing plate unit, the second tab pressing plate unit has the same structure as the first tab pressing plate unit, and the first tab pressing plate unit and the second tab pressing plate unit operate alternately;
the terminal post welding device is provided with a welding station, a first pressing plate replacing station and a second pressing plate replacing station, and the first pressing plate replacing station and the second pressing plate replacing station are respectively located on opposite sides of the welding station; the welding assembly is arranged corresponding to the welding station, the first tab pressing plate unit is configured to be capable of being driven to switch and move between the welding station and the second pressing plate replacing station, and the second tab pressing plate unit is configured to be capable of being driven to switch and move between the welding station and the first pressing plate replacing station;
the terminal post welding device further comprises a first pressing plate replacing assembly and a second pressing plate replacing assembly; the first pressing plate replacing assembly is arranged at the first pressing plate replacing station, and is used to replace the first tab pressing plate in the second tab pressing plate unit at the first pressing plate replacing station; the second pressing plate replacing assembly is arranged at the second pressing plate replacing station, and is used to replace the first tab pressing plate in the first tab pressing plate unit at the second pressing plate replacing station.

5. The terminal post welding device according to claim 4, wherein
the first pressing plate replacing assembly comprises a first pressing plate storage bin and a first pressing plate waste bin, the first pressing plate storage bin is used to store the first tab pressing plate to be replaced, and the first pressing plate waste bin is used to store the replaced first tab pressing plate.

6. The terminal post welding device according to claim 1, wherein
the terminal post welding device further comprises a reference assembly, the reference assembly is arranged corresponding to the welding assembly and comprises a reference plate unit and a pushing unit;
the reference plate unit is configured to: move to a position between the welding assembly and the battery cell fixing assembly when the battery cell fixing assembly moves to correspond to the corresponding welding assembly;
the pushing unit is configured to: push the cell fixing assembly and/or the battery cell to abut against the reference plate unit when the reference plate unit moves to a position between the welding assembly and the battery cell fixing assembly.

7. The terminal post welding device according to claim 1, wherein
the terminal post welding device further comprises a code scanning assembly, the code scanning assembly is used to perform code scanning on the battery cell fixing assembly that supports and fixes the battery cell and the first tab pressing plate unit that presses the tab portion of the same battery cell.

8. The terminal post welding device according to claim 1, wherein
the terminal post welding device further comprises a first dust removal assembly, the first dust removal assembly is mounted on the first tab pressing plate unit; when the welding assembly welds the tab portion and the terminal post that are pressed together, the first dust removal assembly communicates with the gas in an area where the tab portion is located.

9. The terminal post welding device according to claim 1, wherein
the terminal post welding device further comprises a battery cell conveying assembly and a second dust removal assembly, the battery cell conveying assembly is used to drive the battery cell fixing assembly to move from the first tab pressing plate unit toward the second dust removal assembly, and the second dust removal assembly is used to remove dust from the welding area of the tab portion.

10. The terminal post welding device according to claim 9, wherein
the second dust removal assembly comprises a dust removal duct and a dust removal hood, the dust removal duct is used to communicate with an exhaust assembly, the dust removal hood communicates with the dust removal duct and is used to press onto the terminal post of the battery cell to form an exhaust space between the terminal post and the dust removal hood.

11. The terminal post welding device according to claim 10, wherein
the second dust removal assembly further comprises a moving brush, the moving brush is arranged in the dust removal hood and is used to contact the welding area of the tab portion and move; and/or
the dust removal hood comprises a plug, and the plug is used to block at least a part of the through hole of the terminal post.

12. The terminal post welding device according to claim 9, wherein
the battery cell conveying assembly is configured to convey the battery cell fixing assembly along a circulation path, the circulation path comprises an upper path, a descending path, a lower path, and an ascending path connected in sequence; and
the battery cell conveying assembly is configured to: when the battery cell fixing assembly enters the descending path from the upper path, drive the battery cell fixing assembly to convey it along the descending path toward the lower path in a translational manner; when the battery cell fixing assembly enters the ascending path from the lower path, drive the battery cell fixing assembly to convey it along the ascending path toward the upper path in a translational manner.

13. The terminal post welding device according to claim 12, wherein
the head end of the battery cell fixing assembly is used to connect the tail end of the adjacent battery cell fixing assembly, and the battery cell fixing assemblies are configured to: lock with each other along the direction from the head end to the tail end and be relatively movable along a direction perpendicular to the direction from the head end to the tail end.

14. The terminal post welding device according to claim 13, wherein
the battery cell conveying assembly comprises: a first drive unit, a second drive unit, a first lifting unit and a second lifting unit,
the first drive unit is used to drive at least one battery cell fixing assembly located in the upper path to move along the upper path, so that all battery cell fixing assemblies located in the upper path move along the upper path,
the first lifting unit is arranged at the tail end of the upper path, and is used to drive the battery cell fixing assembly to separate from the battery cell fixing assembly located in the upper path, enter the descending path, and connect with the battery cell fixing assembly located in the lower path,
the second drive unit is used to drive at least one battery cell fixing assembly located in the lower path to move along the lower path, so that all battery cell fixing assemblies located in the lower path move along the lower path;
the second lifting unit is arranged at the head end of the upper path, and is used to drive the battery cell fixing assembly to separate from the battery cell fixing assembly located in the lower path, enter the ascending path, and connect with the battery cell fixing assembly located in the upper path.

15. The terminal post welding device according to claim 13, wherein
the battery cell fixing assembly has a first connecting portion located at the head end and a second connecting portion located at the tail end, one of the first connecting portion and the second connecting portion is provided with a limiting slide groove, the extension direction of the limiting slide groove is perpendicular to the direction from the head end to the tail end, and the other is provided with a roller slidably arranged in the limiting slide groove, so that when any two battery cell fixing assemblies are connected, they are relatively locked in the direction from the head end to the tail end, and slide relatively in the direction along the extension direction of the limiting slide groove.

16. The terminal post welding device according to claim 9, wherein
the terminal post welding device further comprises a photographing assembly, the battery cell conveying assembly is used to drive the battery cell fixing assembly to move from the second dust removal assembly toward the photographing assembly, the photographing assembly comprises a 2D camera system and/or a 3D camera system, the 2D camera system is used to take pictures of the terminal posts that have been welded, and the 3D camera system is used to perform 3D contour line scanning on the terminal posts that have been welded.

17. The terminal post welding device according to claim 1, wherein
the first tab pressing plate is made of tungsten steel.

18. The terminal post welding device according to any one of claims 1 to 17, wherein
the terminal post welding device further comprises a battery cell loading assembly and a battery cell flipping assembly; the battery cell loading assembly is used to support the battery cells arranged upright and transport the battery cells toward the battery cell flipping assembly; the battery cell flipping assembly is used to clamp the battery cells arranged upright, flip the battery cells to a lying-down state, and place the battery cells arranged in a lying-down state onto the battery cell fixing assembly.

19. A battery assembling system, comprising the terminal post welding device according to any one of claims 1 to 18.

20. The battery assembling system according to claim 19, wherein the battery cell comprises a case, a bottom cover, and an electrode assembly; the case has an open end, a terminal post is arranged on a wall of the case opposite to the open end, the terminal post has a through hole, and the case and the bottom cover are connected to form an accommodating cavity in communication with the through hole; an active material coating portion of the electrode assembly is arranged in the case, and a tab portion of the electrode assembly passes through the through hole and is connected to a side of the terminal post away from the accommodating cavity;
the battery assembling system further comprises a conveying device and an assembling device, the conveying device is used to convey a structure to be assembled to the stations of the assembling device; the station of the assembling device at least comprises the terminal post welding device;
wherein the terminal post welding device is used to weld the tab passing through the through hole to a side of the terminal post away from the accommodating cavity.

21. The battery assembling system according to claim 20, wherein the battery assembling system further comprises a tab forming device, a case loading device, a tab threading device and a bottom cover welding device;
wherein the tab forming device is used to weld a plurality of tab sheets of the electrode assembly to form a tab portion; the case loading device is used to load the electrode assembly into the case from the open end; the tab threading device is used to clamp the tab portion to pass through the through hole when the electrode assembly is loaded into the case; the bottom cover welding device is used to weld the bottom cover to the open end of the case.
